# EUROPÄISCHE PATENTSCHRIFT

(11) **EP 1 998 069 B1**
(45) Veröffentlichungstag und Bekanntmachung des Hinweises auf die Patenterteilung: **24.12.2014**
(21) Anmeldenummer: 08009165.5
(22) Anmeldetag: 17.05.2008
(51) Int. Cl.: F16F 1/38, B60G 21/055

(54) **Elastische Lagerbuchse, insbesondere Stabilisatorlager eines Kraftfahrzeugs**
Elastic bearing, in particular bearing for stabiliser bar of a motor vehicle
Coussinet élastique, en particulier palier de barre stabilisatrice d'un véhicule automobile

(30) Priorität: 26.05.2007 DE 102007024740
(43) Veröffentlichungstag der Anmeldung: 03.12.2008
(73) Patentinhaber: Jörn GmbH, 71336 Waiblingen (DE)
(72) Erfinder: Mursinsky, Jörg, 71364 Winnenden (DE); Schwaiger, Franz, 85757 Karlsfeld (DE)
(74) Vertreter: Liebl, Thomas

(56) Entgegenhaltungen:
- EP-A2- 0 381 945
- FR-A1- 2 214 067

## Beschreibung

Die Erfindung betrifft eine elastische Lagerbuchse, insbesondere ein Stabilisatorlager eines Kraftfahrzeugs nach dem Oberbegriff des Anspruchs 1.

Ein bekanntes Stabilisatorlager (DE 26 08 553 A1) besteht aus einer Elastomerbuchse und durch Spannschrauben zusammenspannbaren Lagerspannhalbschalen, die ein Aufnahmeauge bilden. Die Elastomerbuchse besteht aus zwei Gummimetallhalbschalen mit je einer Gummihalbschale auf die jeweils eine innere Metallhalbschale und eine äußere Metallhalbschale festhaftend aufvulkanisiert sind. Vor dem Zusammenspannen liegen diese Gummimetallhalbschalen auf dem Stabilisator so aneinander, dass an den Längskanten Längsschlitze verbleiben, die beim Zusammenspannen geschlossen werden. Auf den inneren Metallhalbschalen ist zudem an der Innenseite jeweils eine dünne Gummischicht aufvulksanisiert. Durch das Zusammenspannen wird in den Gummihalbschalen eine Radialspannung erzeugt, durch die die Elastomerbuchse insgesamt sowohl im Aufnahmeauge als auch auf dem Stabilisatorstab unverdrehbar gehalten wird. Die Bewegungsaufnahme erfolgt molekular in den unter Vorspannung stehenden Gummihalbschalen, die sich beim Zusammenspannen zu einem durchgehenden zylindrischen Ring angelegt haben. Es handelt sich somit hier um eine zweiteilige Ausführung mit zwei getrennten Gummimetallhalbschalen.

Für eine verbesserte Handhabung bei der Montage ist ein ähnliches Stabilisatorlager bekannt (EP 0 381 945 A2), bei der an einer Längsseite gegenüberliegende Gummimetallhalbschalen durch eine dünne Gummibrücke verbunden sind, die als Längsscharnier wirkt und an der die Gummimetallhalbschalen aufschwenkbar verbunden sind. Damit wird erreicht, dass die Gummimetallhalbschalen zusammenhängen und im aufgeschwenkten Zustand auf einen Stabilisatorstab aufgesteckt werden können und damit dort durch die Rückstellkraft des Gummis zumindest weder teilweise schließen und vorläufig bis zum heranführen der Lagerspannhalbschalen von selbst halten.

Weiter ist eine gattungsgemäße elastische Lagerbuchse insbesondere als Stabilisatorlager eines Kraftfahrzeugs bekannt, mit einem kreiszylindrischen Innenteil, insbesondere einem Stabilisatorstab und mit einer Elastomerbuchse, die aus einer Trägerbuchse mit wenigstens einer darauf festhaftend angebrachten Elastomerschicht besteht. Die Elastomerbuchse weist dabei im Herstellzustand einen Längsspalt und ein dazu radial gegenüberliegendes Längsscharnier auf, wobei durch den Längsspalt und das Längsscharnier eine Schwenkebene definiert ist. Die Elastomerbuchse ist am Längsscharnier aufschwenkbar, radial auf das Innenteil, insbesondere den Stabilisatorstab aufsteckbar und anschließend für eine vorläufige Halterung wieder teilweise zuschwenkbar. Weiter sind durch Spannschrauben zusammenspannbare, ein Lagerauge bildende Lagerspannhalbschalen mit einer kreiszylindrischen Innenkontur vorgesehen, die die Elastomerbuchse umgreifen. Der Ringraum zwischen den zusammengespannten Lagerhalbschalen und dem kreiszylindrischen Innenteil, insbesondere dem Stabilisatorstab ist kleiner als die Ringdicke der Elastomerbuchse im Herstellzustand, so dass bei zusammengespannten Lagerhalbschalen eine Vorspannung in der Elastomerschicht aufgebracht ist.

Konkret ist hier die Elastomerbuchse im Herstellzustand in ihrer Form aus zwei Kreiszylinderhalbschalen zusammengesetzt, die über das Längsscharnier verbunden sind, wobei die Kreiszylinderhalbschalen jeweils aus einer formstabilen Trägerbuchsenhalbschale aus Metall mit einer darauf festhaftend angebrachten radial inneren Elastomerschicht und einer radial äußeren Elastomerschicht gebildet sind.

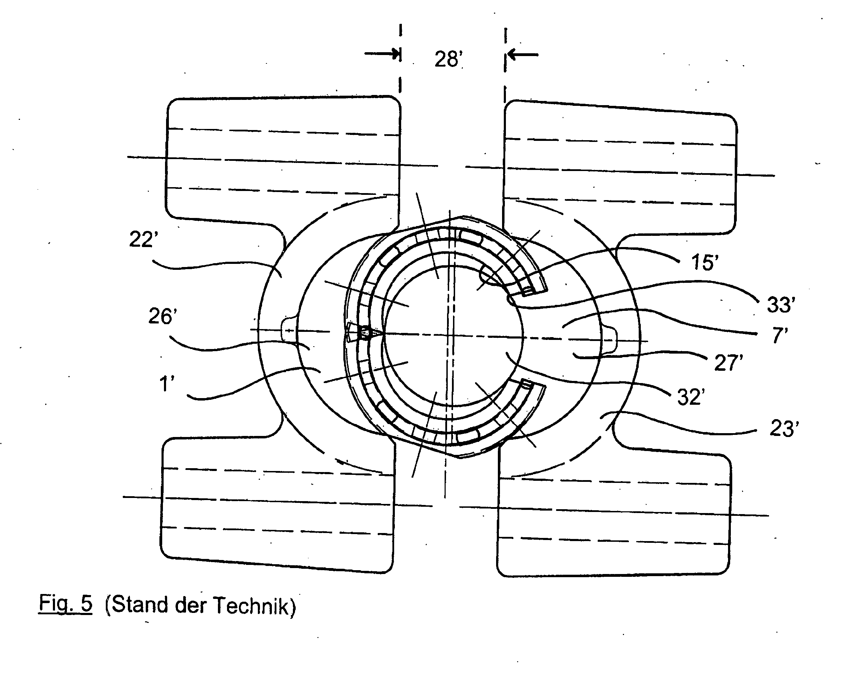

Um in der radial inneren Elastomerschicht eine erforderliche Vorspannung aufbringen zu können, ist deren Innenradius kleiner als der Radius des inneren Metallteils bzw. des Stabilisatorstabs. Dadurch lässt sich die aufgeschwenkte Elastomerbuchse nicht formschlüssig auf das Innenteil bzw. den Stabilisatorstab aufstecken, sondern klafft vor dem Zusammenspannen durch die Lagerspannhalbschalen am Längsspalt weit auf und die Lagerspannhalbschalen können dadurch vor dem Spannvorgang nur so weit an die aufgesteckte Elastomerbuchse herangeführt werden, dass dazwischen ein relativ großer Abstand verbleibt. Zur Aufbringung einer erforderlichen Vorspannung in der radial äußeren Elastomerschicht ist der Radius deren Außenkontur größer als der Innenradius der zusammengespannten Lagerspannhalbschalen ist. Dabei ist es bereits bekannt, an der radial äußeren Elastomerschicht im Bereich einer bezüglich der Schwenkebene errichteten Normallängsmittenebene jeweils gegenüberliegende, buchsenaußenseitige Längsabflachungen vorzusehen (siehe dazu Fig. 5), wodurch die Lagerspannhalbschalen auch bei weit aufklaffendem Längsspalt die radial äußere Elastomerschicht etwas weiter übergreifen können und damit vor dem Zusammenspannvorgang im Vergleich zu einer Ausführungsform ohne solche Längsabflachungen etwas weiter zusammengeführt werden können. Dennoch bleibt auch trotz dieser Maßnahme ein relativ weiter Abstand der zusammengeführten Lagerspannhalbschalen vor dem Spannvorgang, der nachteilig lange teuere Spannschrauben mit einem ungünstig lange dauernden Spannvorgang für einen großen Spannweg in Verbindung mit einem erforderlichen großen Montageraum bedingt.

Aufgabe der Erfindung ist es daher, ein gattungsgemäßes elastisches Lager so weiterzubilden, dass der Montageaufwand insgesamt verringert werden kann.

Diese Aufgabe wird mit den Merkmalen des Anspruchs 1 gelöst.

Gemäß Anspruch 1 ist bei der Elastomerbuchse im Herstellzustand anstelle einer Kreiszylinderform der Buchsendurchmesser der Innenkontur und/oder der Außenkontur in der Schwenkebene größer als in einer dazu im 90°-Winkel stehenden Normallängsmittenebene, wobei im zusammengespannten Zustand der Lagerhalbschalen die Elastomerbuchse mit einer kreiszylindrisch verformten Innenkontur und Außenkontur formschlüssig unter Vorspannung jeweils am kreiszylindrischen Innenteil und an der kreiszylindrisch geschlossenen Innenkontur der zusammengespannten Lagerhalbschalen anliegt.

Durch die erfindungsgemäße Abweichung und Streckung der Querschnittsform der Elastomerbuchse gegenüber einer reinen Kreiszylinderform kann die aufgeschwenkte Elastomerbuchse weiter auf das kreiszylindrische Innenteil, insbesondere einen Stabilisatorstab so aufgesteckt und zusammengeschwenkt werden, dass der Längsspalt nicht mehr so weit aufklafft und die Lagerspannhalbschalen vor dem Spannvorgang näher zusammengeführt werden können. Damit sind die Spannwege verkürzt, so dass vorteilhaft kürzere Spannschrauben verwendet werden können und bei kleinerem erforderlichen Montageraum die Spannzeiten und damit die Montagezeiten verkürzt werden.

In einer bevorzugten Ausführungsform nach Anspruch 2 wird die erfindungsgemäße Streckung gegenüber einer reinen Kreiszylinderform dadurch erreicht, dass die Elastomerbuchse im Herstellzustand in ihrer Form aus zwei Kreiszylinderlängsabschnitten zusammengesetzt ist, das heißt nicht aus zwei in der Längsmitte geteilten Kreiszylinderhalbschalen sondern um Schalenteile mit dagegen verringertem Umfangsbereich. Dazu ist ein erster Kreiszylinderlängsabschnitt vorgesehen, der an einer ersten Seite bezüglich der Schwenkebene liegt dergestalt, dass die zugehörige Kreismittelachse sowohl auf der Normallängsmittenebene als auch versetzt zur Schwenkebene an der anderen zweiten Seite liegt. Entsprechend ist ein zweiter Kreiszylinderlängsabschnitt vorgesehen, der an der zweiten Seite bezüglich der Schwenkebene gegenüber dem ersten Kreiszylinderabschnitt liegt dergestalt, dass hier die zugehörige Kreismittelachse entsprechend auf der Normallängsmittenebene und versetzt zur Schwenkebene an der ersten Seite liegt. Damit wird erreicht, dass der Buchsendurchmesser der Innenkontur und der Außenkontur in der Schwenkebene größer ist als in der senkrechten Normallängsmittenebene, wodurch die Elastomerbuchse vor dem Spannvorgang weiter mit einem geringeren Längsspalt auf das kreiszylindrische Innenteil, insbesondere der Stabilisatorstab aufsteckbar ist.

Gemäß Anspruch 3 kann dabei der Radius der Innenkontur der Kreiszylinderlängsabschnitte jeweils gleich dem Radius des Innenteils sein. Nach dem Zusammenspannen der Lagerspannhalbschalen liegt dann die Kreismittelachse der Innenkontur der Kreiszylinderlängsabschnitte in der Schwenkebene und fällt mit der Kreismittelachse des zylindrischen Aufnahmeauges und des Innenteils zusammen.

Alternativ zur Form nach Anspruch 2 kann die Elastomerbuchse gemäß Anspruch 4 im Herstellzustand auch eine entsprechend gestreckte elliptische Form aufweisen.

Bei einer weiteren alternativen Ausführungsform nach Anspruch 5 wird vorgeschlagen, dass die Elastomerbuchse im Herstellzustand in ihrer Form einen ovalen Querschnitt aufweist mit einer mehr bauchigen Form im Bereich des Längsscharniers und einer dazu flacheren Form zum Längsspalt hin, da insbesondere eine enge Rundung im Bereich des Längsspalts das seitliche Aufstecken und teilweise Schließen der Elastomerbuchse behindert (siehe Stand der Technik gemäß Fig. 5).

Auch bei der erfindungsgemäßen gegenüber einer Kreiszylinderform etwas längsgestreckteren Querschnittsform ist es vorteilhaft, die an sich bekannten buchsenaußenseitig gegenüberliegenden Längsabflachungen gemäß Anspruch 6 vorzusehen, welche das Zusammenführen der Lagerspannhalbschalen vor dem Spannvorgang begünstigt.

In einer konkreten bevorzugten Ausführungsform nach Anspruch 7 ist die Trägerbuchse aus zwei weitgehend formstabilen Trägerbuchsen-Schalenteilen aus Metall oder Kunststoff gebildet, auf denen eine radial innere Elastomerschicht und eine radial äußere Elastomerschicht festhaftend angebracht sind. Das Längsscharnier ist durch eine Elastomerbrücke der dort zumindest teilweise nicht materialeinheitlich verbundenen Trägerbuchsen-Schalenteilen und/oder durch eine Materialverdünnung dort zumindest in Teilbereichen materialeinheitlich verbundener Trägerbuchsen-Schalenteilen gebildet.

Die Elastomerbuchse kann auch einen anderen mehrschichtigen Aufbau aufweisen. Insbesondere kann nach Anspruch 8 in wenigstens einer Elastomerschicht wenigstens ein relativ dünnes verformbares Zwischenblech oder eine entsprechende Kunststoffschale eingeformt sein, die sich gegebenenfalls über den Bereich des Längsscharniers erstrecken und damit Bestandteil des Längsscharniers sein können.

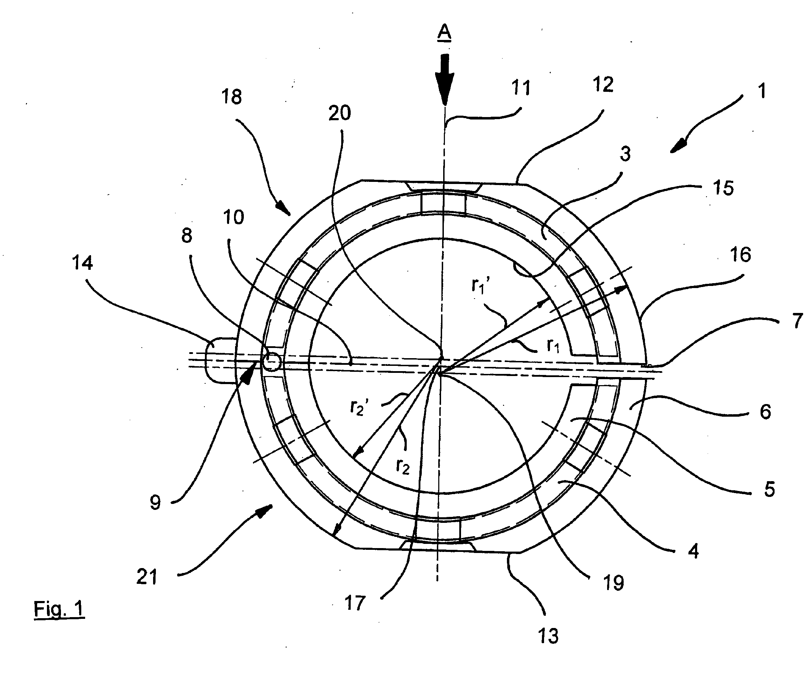

Zweckmäßig weist nach Anspruch 9 die Elastomerbuchse im Herstellzustand einen Längsspalt mit bestimmter Spaltweite auf, der bei zusammengespannten Lagerspannhalbschalen geschlossen ist. Unter dem Begriff "Herstellzustand" wird in den Unterlagen allgemein der bis gegebenenfalls auf einen Spalt mit geringer Spaltbreite zusammengeklappte Zustand der Elastomerbuchse ohne Innenteil (beispielsweise entsprechend Fig. 1) verstanden.

Vorteilhaft kann auch hier in an sich bekannter Weise gemäß Anspruch 10 an der Außenseite der Elastomerbuchse, vorzugsweise im Bereich des Längsscharniers eine vorzugsweise langgestreckte längsverlaufende Arretiernase angeformt sein und entsprechend in wenigstens einer, vorzugsweise in beiden Lagerspannhalbschalen eine der Arretiernase entsprechende Ausnehmung vorgesehen sein. Diese Arretiernase dient einer Lagesicherung in Verdrehrichtung und gegebenenfalls in axialer Richtung. Wenn in beiden Lagerspannhalbschalen eine Ausnehmung vorgesehen ist, erleichtert dies die Montage und alle Lagerspannhalbschalen sind Gleichteile.

Anhand einer Zeichnung wird ein Ausführungsbeispiel der Erfindung weiter erläutert.

Es zeigen:
- Fig. 1: eine axiale Draufsicht auf eine Elastomerbuchse eines Stabilisatorlagers im Herstellzustand,
- Fig. 2: eine Draufsicht auf eine Längsseite der Elastomerbuchse nach Fig. 1 in Blickrichtung A,
- Fig.3: eine axiale Ansicht eines Stabilisatorlagers mit auf dem Stabilisator aufgesteckter Elastomerbuchse und daran herangeführter Lagerspannhalbschalen vor dem Spannvorgang,
- Fig. 4: eine Darstellung entsprechend Fig. 3 mit zusammengespannten Lagerspannhalbschalen, und
- Fig. 5: eine Ansicht entsprechend Fig. 3 unter Verwendung einer Elastomerbuchse nach dem Stand der Technik.

In Fig. 1 ist eine Elastomerbuchse 1 eines Stabilisatorlagers 2 dargestellt mit einer Trägerbuchse, die aus zwei weitgehend formstabilen Trägerbuchsen-Schalenteilen 3, 4 aus Metall oder Kunststoff gebildet ist, wobei auf den Trägerbuchsen-Schalenteilen jeweils eine radial innere Elastomerinnenschicht 5 und eine radial äußere Elastomeraußenschicht 6 festhaftend aufgebracht sind.

Die Trägerbuchsen-Schalenteile 3, 4 sowie die Elastomerinnenschicht 5 und die Elastomeraußenschicht 6 sind an einer Längsseite durch einen Längsspalt 7 mit relativ geringer Spaltbreite getrennt. Gegenüberliegend dazu sind die Trägerbuchsen-Schalenteilen 3, 4 materialeinheitlich über eine Materialverdünnung 8 sowie die dort zumindest teilweise durchgehende Elastomerschichten 5, 6 verbunden, wodurch ein Längsscharnier 9 gebildet ist, um das die Elastomerbuchse 1 aufschwenkbar ist. Durch den Längsspalt 7 und das Längsscharnier 9 verläuft eine mittlere Schwenkebene 10, wobei zudem eine darauf im 90°-Winkel stehende Normallängsmittenebene 11 definiert ist.

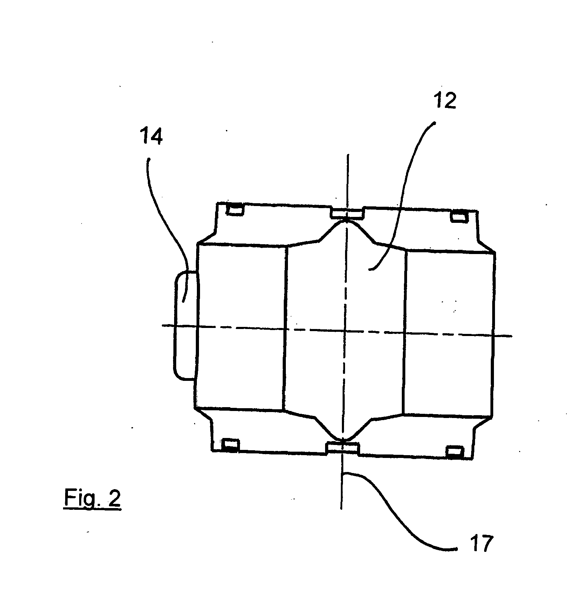

Die Elastomeraußenschicht 6 weist im Bereich der Normallängsmittenebene 11 jeweils gegenüberliegende buchsenaußenseitige Längsabflachungen 12, 13 auf, wobei die Längsabflachung 12 ins Besondere aus der Draufsicht nach Fig. 2 ersichtlich ist.

Im Bereich des Längsscharniers 9 ist zudem buchsenaußenseitig an der Elastomeraußenschicht 6 eine radial abstehende längsverlaufende Arretiernase 14 angeformt.

Sowohl die Innenkontur 15 als auch die Außenkontur 16 der Elastomerbuchse 1 sind im gezeigten Herstellzustand der Fig. 1 und 2 nicht kreiszylindrisch sondern haben eine sowohl zum Längsscharnier 9 als auch zum Längsspalt 7 hin eine demgegenüber etwas gestrecktere Form, das heißt, die Schalenteile haben im gezeigten Herstellzustand keine gemeinsame Kreismittelachse, die mit der Lagermittenachse 17 zusammenfällt:

Die Elastomerbuchse 1 besteht dagegen in ihrer Form aus einem ersten Kreiszylinderlängsabschnitt 18 an einer ersten (oberen) Seite bezüglich der Schwenkebene 10, wobei die zugehörige Kreismittelachse 19 für den Radius r1 der Innenkontur 15 und den Radius r1' für die Außenkontur 16 auf der Normallängsmittenebene 11 jedoch versetzt zur Schwenkebene 10 an der zweiten (unteren) Seite liegt. Entsprechend liegt die Kreismittelachse 20 für die entsprechenden Radien r2 und r2' des gegenüberliegenden Kreiszylinderlängsabschnitts 21 ebenfalls auf der Normallängsmittenebene 11, jedoch zur ersten (oberen) Seite bezüglich der Schwenkebene 10 versetzt. Damit ist der Buchsendurchmesser der Innenkontur 15 und der Außenkontur 16 in der Schwenkebene 10 jeweils größer als in Richtung der Normallängsmittenebene gemessen.

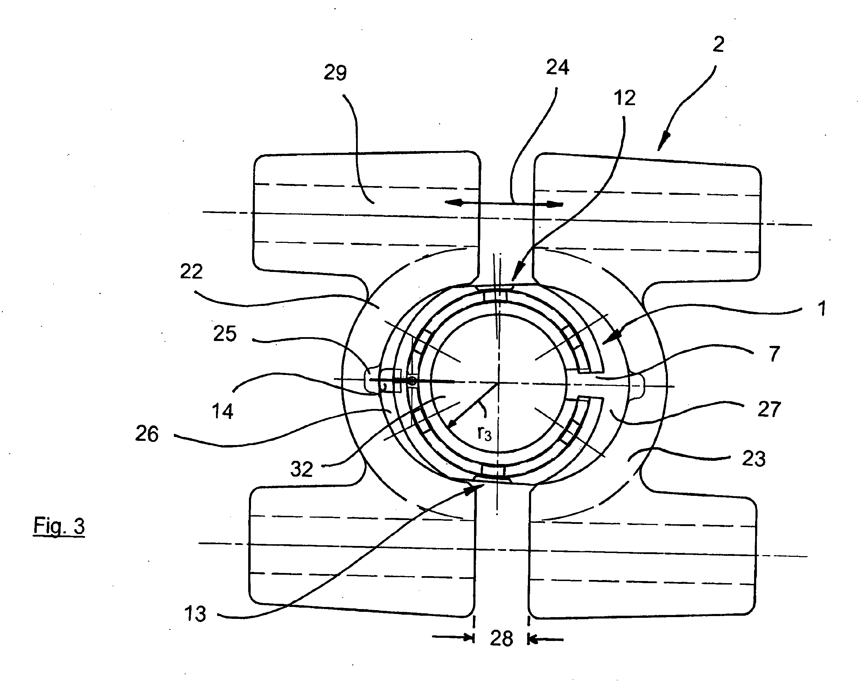

Fig. 3 zeigt das Stabilisatorlager 2 in einem Zwischenmontagezustand, in dem die Elastomerbuchse 1 am Längsscharnier 9 aufgeschwenkt worden ist und von der Seite her auf einen Stabilisatorstab 32 aufgesteckt und so weit wie möglich wieder geschlossen ist, wobei gegenüber dem Herstellzustand nach Fig. 1 ein etwas größerer Längsspalt 7 verbleibt. Der kreiszylindrische Stabilisatorstab 32 weist eine Radius r3 auf, dem auch die Radien r1 und r2 der Innenkontur 15 (Fig. 1) in der Größe entsprechen.

Zudem sind in Fig. 3 Lagerspannhalbschalen 22, 23 so weit als möglich an die aufgesteckte Elastomerbuchse 1 herangeführt und zur Anlage gebracht. Die Lagerspannhalbschalen 22, 23 sind dabei so herangeführt, dass die Längsabflachungen 12, 13 sowie die Arretiernase in Spannrichtung (Doppelpfeil 24) ausgerichtet sind.

Die Lagerspannhalbschalen 22, 23 haben eine halbkreiszylinderförmige Innenkontur, die im zusammengespannten Zustand zu einer kreiszylinderförmigen Innenkontur geschlossen ist. Der Arretiernase 14 ist eine entsprechende Ausnehmung 25 an der Lagerspannhalbschale 22 zugeordnet, in die die Arretiernase 14 im zusammengespannten Zustand eingreift. Im Zwischenmontagezustand nach Fig. 3 verbleibt vor dem Spannvorgang zwischen Elastomerbuchse 1 und der Lagerspannhalbschale 22 ein Freiraum 26 und zur Lagerspannhalbschale 23 hin ein Freiraum 27, wodurch sich ein Abstand 28 zwischen den Lagerspannhalbschalen 22, 23 entsprechend dem Spannweg ergibt.

Die Lagerspannhalbschalen 22, 23 weisen zudem jeweils gegenüberliegende Bohrungen 29 für (hier nicht dargestellte) Spannschrauben auf.

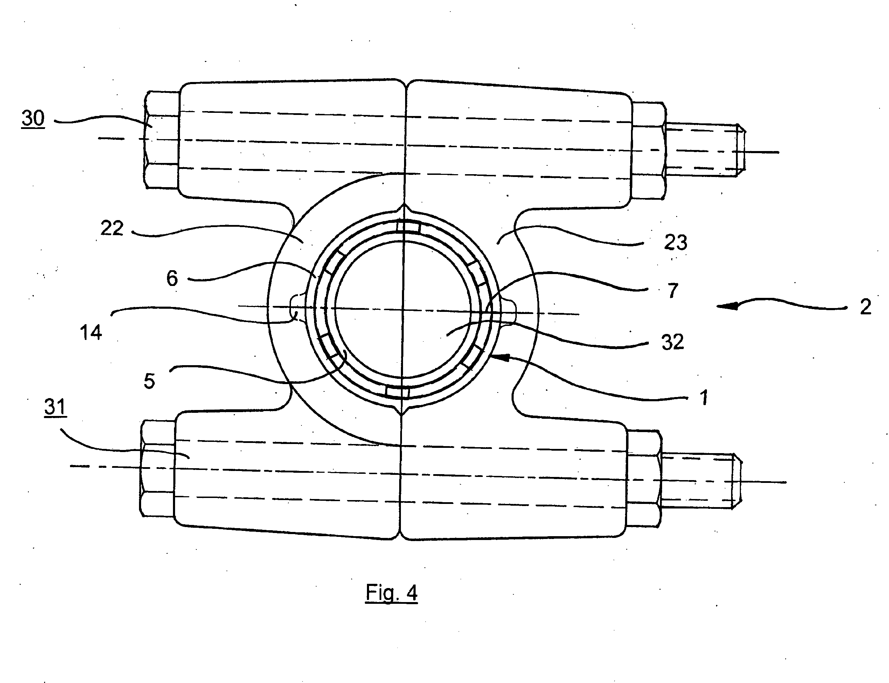

Fig. 4 zeigt den fertig montierten Zustand des Stabilisatorlagers 2, bei dem mittels Spannschrauben 30, 31 die Lagerspannhalbschalen 22, 23 zusammengespannt sind und aneinander liegen, wodurch ein kreiszylinderförmiges Aufnahmeauge für die Elastomerbuchse 1 und den Stabilisatorstab 32 gebildet ist.

Im fertig montierten Zustand ist der Längsspalt 7 geschlossen, so dass die Elastomerbuchse 1 eine durchgehende Ringstruktur aufweist, wobei die Elastomerinnenschicht 5 und Elastomeraußenschicht 6 unter Vorspannung kreisringförmig verformt sind. Zudem greift die Arretiernase 14 in die Ausnehmung 25 der Lagerspannhalbschale 22 ein.

In Fig. 5 ist zum besseren Verständnis der Erfindung ein Zwischenmontagezustand entsprechend Fig. 3 jedoch mit einer Elastomerbuchse 1' nach dem Stand der Technik dargestellt. Die Innenkontur 15' der Elastomerbuchse 1' ist hier wie bisher üblich kreiszylinderförmig ausgebildet mit einem kleineren Radius im Vergleich zum Stabilisatorstab 32', das heißt ohne die erfindungsgemäße Streckung der Innenkontur in Richtung der Schwenkebene 10. Dadurch kann die Elastomerbuchse vor dem Zusammenspannen der Lagerspannhalbschalen 22', 23' im Vergleich zu Fig. 3 nicht soweit übergreifen, da die Längsränder 33' mit weit aufklaffendem Längsspalt 7 bald am Stabilisatorstab 32 anliegen. Dadurch ergeben sich große Freiräume 26', 27' und ersichtlich ein großer relativer Abstand 28' zwischen den Lagerspannhalbschalen 22', 23', der einen vergleichsweise längeren Spannweg und längere Spannschrauben bedingt.

## Patentansprüche

1. Elastische Lagerbuchse, insbesondere Stabilisatorlager eines Kraftfahrzeugs
mit einem kreiszylindrischen Innenteil, insbesondere einem Stabilisatorstab (32),
mit einer Elastomerbuchse (1), die aus einer Trägerbuchse (3, 4) mit wenigstens einer darauf festhaftend angebrachten Elastomerschicht (5, 6) besteht, wobei
die Elastomerbuchse (1) im Herstellzustand einen Längsspalt (7) und ein dazu radial gegenüberliegendes Längsscharnier (9) mit einer dadurch definierten Schwenkebene (10) aufweist, und am Längsscharnier (9) die Elastomerbuchse (1) aufschwenkbar und radial auf das Innenteil (32) aufsteckbar ist, und
mit durch Spannschrauben (30, 31) zusammenspannbaren, ein Lagerauge bildende Lagerspannhalbschalen (22, 23) mit einer kreiszylindrischen Innenkontur, die die Elastomerbuchse (1) umgreifen, wobei der Ringraum zwischen den zusammengespannten Lagerspannhalbschalen (22, 23) und dem Innenteil (32) kleiner ist als die Ringdicke der Elastomerbuchse (1) im Herstellzsutand, so dass bei zusammengespannten Lagerhalbschalen (22, 23) eine Vorspannung in der Elastomerschicht (5, 6) aufgebracht ist,
**dadurch gekennzeichnet,**
**dass** bei der Elastomerbuchse (1) im Herstellzustand an Stelle einer Kreiszylinderform der Buchsendurchmesser der Innenkontur (15) und/oder der Außenkontur (16) in der Schwenkebene (10) größer ist als in einer dazu im 90°-Winkel stehenden Normallängsmittenebene (11), und
**dass** im zusammengespannten Zustand der Lagerhalbschalen (22, 23) die Elastomerbuchse (1) weitgehend mit einer kreiszylindrisch verformten Innenkontur (15) und Außenkontur (16) formschlüssig unter Vorspannung jeweils am kreiszylindrischen Innenteil (32) und an der kreiszylindrisch geschlossenen Innenkontur der zusammengespannten Lagerhalbschalen (22, 23) unter Vorspannung anliegt.

2. Elastische Lagerbuchse nach Anspruch 1, **dadurch gekennzeichnet, dass** die Elastomerbuchse (1) im Herstellzustand in ihrer Form aus zwei Kreiszylinderlängsabschnitten (18, 21) zusammengesetzt ist,
wobei ein erster Kreiszylinderlängsabschnitt (18) an einer ersten Seite bezüglich der Schwenkebene (10) liegt dergestalt, dass die zugehörige Kreismittelachse (19) auf der Längsmittenebene (11) und versetzt zur Schwenkebene (10) an der zweiten Seite liegt, und
ein zweiter Kreiszylinderlängsabschnitt (21) an der zweiten Seite bezüglich der Schwenkebene (10) liegt, dergestalt dass die zugehörige Kreismittelachse (20) auf der Normallängsmittenebene (11) und versetzt zur Schwenkebene (10) an der ersten Seite liegt,
sodass damit der Buchsendurchmesser der Innenkontur (15) und der Außenkontur (16) in der Schwenkebene (10) jeweils größer ist als in der senkrechten Längsmittenebene (11).

3. Elastische Lagerbuchse nach Anspruch 2, **dadurch gekennzeichnet, dass** der Radius (r₁ und r₂) der Innenkontur (15) der Kreiszylinderlängsabschnitte (18, 21) jeweils gleich dem Radius des Innenteils (32) ist.

4. Elastische Lagerbuchse nach Anspruch 1, **dadurch gekennzeichnet, dass** die Elastomerbuchse (1) im Herstellzustand in ihrer Form einen elliptischen Querschnitt aufweist.

5. Elastische Lagerbuchse nach Anspruch 1, **dadurch gekennzeichnet, dass** die Elastomerbuchse (1) im Herstellzustand in ihrer Form einen ovalen Querschnitt aufweist mit einer bauchigeren Form im Bereich des Längsscharniers (9) und einer flacheren Form zum Längsspalt (7) hin.

6. Elastische Lagerbuchse nach einem der Ansprüche 2 bis 5, **dadurch gekennzeichnet, dass** die Elastomerbuchse (1) im Bereich der Normallängsmittenebene (11) jeweils gegenüberliegende, buchsenaußenseitige Längsabflachungen (12, 13) aufweist.

7. Elastische Lagerbuchse nach einem der Ansprüche 1 bis 6, **dadurch gekennzeichnet, dass** die Trägerbuchse aus zwei weitgehend formstabilen Trägerbuchsen-Schaltenteilen (3, 4) aus Metall oder Kunststoff gebildet ist, auf denen eine radial innere Elastomerinnenschicht (5) und eine radial äußere Elastomeraußenschicht (6) festhaftend angebracht sind, und
dass das Längsscharnier (9) durch eine Elastomerbrücke dort zumindest teilweise nicht materialeinheitlich verbundener Trägerbuchsen-Schaltenteilen (3, 4) und/oder durch eine Materialverdünnung (8) dort zumindest in Teilbereichen materialeinheitlich verbundender Trägerbuchsen-Schaltenteilen (3, 4) gebildet ist.

8. Elastische Lagerbuchse nach einem der Ansprüche 1 bis 7, **dadurch gekennzeichnet, dass** die Elastomerbuchse (1) einen mehrschichtigen Aufbau aufweist, indem in wenigstens einer Elastomerschicht (5, 6) wenigstens ein relativ dünnes, verformbares Zwischenblech oder eine Kunststoffschale eingeformt ist, welche gegebenenfalls über den Bereich des Längsscharniers geführt sind und Bestandteil des Längsscharniers (9) sind.

9. Elastische Lagerbuchse nach einem der Ansprüche 1 bis 8, **dadurch gekennzeichnet, dass** im Herstellzustand der Elastomerbuchse (1) der Längsspalt (7) eine bestimmte Spaltweite aufweist, der bei zusammengespannten Lagerspannhalbschalen (22, 23) geschlossen ist.

10. Elastische Lagerbuchse nach einem der Ansprüche 1 bis 9, **dadurch gekennzeichnet, dass** an der Außenseite der Elastomerbuchse (1), vorzugsweise im Bereich des Längsscharniers (9) eine vorzugsweise langgestreckte, längsverlaufende Arretiernase (14) angeformt ist, und
dass in wenigstens einer, vorzugsweise in beiden Lagerspannhalbschalen (22, 23) an deren Längsmitte eine der Arretiernase (14) entsprechende Ausnehmung (25) vorgesehen ist.

## Claims

1. Elastic bearing bush, in particular stabiliser mount, of a motor vehicle
having a circular cylindrical inner part, in particular a stabiliser rod (32),
having an elastomer bush (1), which consists of a support bush (3, 4) having at least one elastomer layer (5, 6) firmly mounted on it, wherein
in the manufactured state, the elastomer bush (1) has a longitudinal gap (7) and a longitudinal hinge (9) radially opposite this, having a swivel plane (10) which is defined by this, and the elastomer bush (1) can be swung open on the longitudinal hinge (9) and can be fitted radially onto the inner part (32), and
having bearing clamp half shells (22, 23) having a circular cylindrical inner contour and forming a bearing eye which can be secured using clamping screws (30, 31), said bearing clamp half shells encompassing the elastomer bush (1), wherein the annular space between the secured bearing clamp half shells (22, 23) and the inner part (32) is smaller than the ring thickness of the elastomer bush (1) in the manufactured state, so that pre-stress in the elastomer layer (5, 6) is applied for secured bearing half shells (22, 23),
**characterised in that**,
for the elastomer bush (1) in the manufactured state, in place of a circular cylindrical form, the bush diameter of the inner contour (15) and/or the outer contour (16) is greater in the swivel plane (10) than in a normal longitudinal central plane (11) standing at a 90° angle to this, and that in the secured state of the bearing half shells (22, 23), the elastomer bush (1) largely positively abuts onto both the circular cylindrical inner part (32) and onto the circular cylindrical closed inner contour of the secured bearing half shells (22, 23) under pre-stress with a circular cylindrically deformed inner contour (15) and outer contour (16) under pre-stress.

2. Elastic bearing bush according to claim 1, **characterised in that** the elastomer bush (1) in the manufactured state is assembled into its shape from two circular cylindrical longitudinal sections (18, 21),
wherein a first circular cylindrical longitudinal section (18) is located on a first side with respect to the swivel plane (10), in such a way that the associated circular central axis (19) is located on the longitudinal central plane (11) and with an offset to the swivel plane (10) on the second side, and
a second circular cylindrical longitudinal section (21) is located on the second side with respect to the swivel plane (10), in such a way that the associated circular central axis (20) is located on the normal longitudinal central plane (11) and with an offset to the swivel plane (10) on the first side,
so that the bush diameter of the inner contour (15) and of the outer contour (16) is thus respectively greater in the swivel plane (10) than in the perpendicular longitudinal central plane (11).

3. Elastic bearing bush according to claim 2, **characterised in that** the radius (r₁ and r₂) of the inner contour (15) of the circular cylindrical longitudinal sections (18, 21) is always the same as the radius of the inner part (32).

4. Elastic bearing bush according to claim 1, **characterised in that** the elastomer bush (1) in the manufactured state has an elliptical cross-section in its shape.

5. Elastic bearing bush according to claim 1, **characterised in that** the elastomer bush (1), in the manufactured state, has an oval cross section in its shape, having a more bulbous shape in the region of the longitudinal hinge (9) and a flatter shape towards the longitudinal gap (7).

6. Elastic bearing bush according to one of claims 2 to 5, **characterised in that** the elastomer bush (1) has longitudinal flat sections (12, 13) that are opposite each other and are located outside of the bush in the region of the normal longitudinal central plane (11).

7. Elastic bearing bush according to one of claims 1 to 6, **characterised in that** the support bush is formed of two largely dimensionally-stable support bush switching parts (3, 4) made from metal or plastic, on which a radially inner elastomer inner layer (5) and a radially outer elastomer outer layer (6) are firmly mounted, and
the longitudinal hinge (9) is formed by an elastomeric bridge of support bush switching parts (3, 4) that are connected at least partially without material unity, and/or by a material thinning (8) of support bush switching parts (3, 4) that are connected with material unity at least in partial regions.

8. Elastic bearing bush according to one of claims 1 to 7, **characterised in that** the elastomer bush (1) has a multi-layer structure, **in that** at least one relatively thin, malleable intermediate metal sheet or a plastic shell is formed in at least one elastomer layer (5, 6), which, if necessary, are guided via the region of the longitudinal hinge and are components of the longitudinal hinge (9).

9. Elastic bearing bush according to one of claims 1 to 8, **characterised in that**, in the manufactured state, the elastomer bush (1) of the longitudinal gap (7) has a specific gap width, which is closed when the bearing clamp half shells (22, 23) are secured.

10. Elastic bearing bush according to one of claims 1 to 9, **characterised in that** a preferably elongated, longitudinal retention catch (14) is formed on the exterior of the elastomer bush (1), preferably in the region of the longitudinal hinge (9), and
in at least one, preferably in both bearing clamp half shells (22, 23), a recess (25) corresponding to one of the retention catches (14) is provided on its longitudinal centre.

## Revendications

1. Coussinet élastique de palier, en particulier palier stabilisateur d'un véhicule automobile,
comprenant un élément intérieur cylindrique circulaire, en particulier une barre stabilisatrice (32),
comprenant un coussinet élastomère (1), qui est constitué d'un coussinet de support (3, 4) pourvu au moins d'une couche élastomère (5, 6) appliquée sur celui-ci de manière à adhérer,
sachant que le coussinet élastomère (1) présente, lors de la fabrication, une fente longitudinale (7) et une charnière longitudinale (9) lui faisant face radialement et un plan de pivotement (10) ainsi défini, et que le coussinet élastomère (1) peut pivoter au niveau de la charnière longitudinale (9) et peut être enfilé radialement sur l'élément intérieur (32), et
comprenant des demi-coques de serrage de palier (22, 23) pouvant être assemblées par serrage par des vis de serrage (30, 31), formant un oeillet de palier et présentant un contour intérieur cylindrique circulaire, lesquelles demi-coques de serrage de palier enserrent le coussinet élastomère (1), sachant que l'espace annulaire situé entre les demi-coques de serrage de palier (22, 23) assemblées par serrage et l'élément intérieur (32) est plus petit que l'épaisseur de bague du coussinet élastomère (1) lors de la fabrication de sorte qu'une précontrainte est appliquée dans la couche élastomère (5, 6) lorsque les demi-coques de palier (22, 23) sont assemblées par serrage,
**caractérisé en ce**
**que**, dans le cas du coussinet élastomère (1), lors de la fabrication, au lieu d'une forme cylindrique circulaire, les diamètres de coussinet du contour intérieur (15) et/ou du contour extérieur (16) sont plus grands dans le plan de pivotement (10) que dans un plan médian longitudinal normal (11) formant avec celui-ci un angle de 90°, et
en ce que lorsque les demi-coques de palier (22, 23) sont assemblées par serrage, le coussinet élastomère (1) repose sous précontrainte par un contour intérieur (15) et un contour extérieur (16) respectivement déformés de manière circulaire, par complémentarité de forme, sous l'effet d'une précontrainte, respectivement au niveau de l'élément intérieur (32) cylindrique circulaire et au niveau du contour intérieur fermé de manière cylindrique circulaire des demi-coques de palier (22, 23) assemblées par serrage.

2. Coussinet élastique de palier selon la revendication 1, **caractérisé en ce que** le coussinet élastomère (1) se compose, lors de la fabrication, dans sa forme, de deux sections longitudinales cylindriques circulaires (18, 21),
sachant qu'une première section longitudinale cylindrique circulaire (18) est disposée au niveau d'un premier côté par rapport au plan de pivotement (10) de telle manière que l'axe central circulaire (19) associé se trouve sur le plan médian longitudinal (11) et au niveau du deuxième côté, de manière décalée par rapport au plan de pivotement (10), et
sachant qu'une deuxième section longitudinale cylindrique circulaire (21) est disposée au niveau du deuxième côté par rapport au plan de pivotement (10), de telle manière que l'axe médian circulaire (20) associé se trouve sur le plan médian longitudinal normal (11) et au niveau du premier côté de manière, décalé par rapport au plan de pivotement (10),
de sorte qu'ainsi le diamètre de coussinet du contour intérieur (15) et du contour extérieur (16) est respectivement plus grand dans le plan de pivotement (10) que dans le plan médian longitudinal (11) perpendiculaire.

3. Coussinet élastique de palier selon la revendication 2, **caractérisé en ce que** le rayon (r₁ et r₂) du contour intérieur (15) des sections longitudinales cylindriques circulaires (18, 21) est respectivement identique au rayon de l'élément intérieur (32).

4. Coussinet élastique de palier selon la revendication 1, **caractérisé en ce que** le coussinet élastomère (1) présente, lors de la fabrication, dans sa forme, une section transversale elliptique.

5. Coussinet élastique de palier selon la revendication 1, **caractérisé en ce que** le coussinet élastomère (1) présente, lors de la fabrication, dans sa forme, une section transversale ovale, avec une forme plus bombée dans la zone de la charnière longitudinale (9) et avec une forme plus plate en direction de la fente longitudinale (7).

6. Coussinet élastique de palier selon l'une quelconque des revendications 2 à 5, **caractérisé en ce que** le coussinet élastomère (1) présente, dans la zone du plan médian longitudinal normal (11), respectivement des parties aplaties longitudinales (12, 13) se faisant face côté extérieur du coussinet.

7. Coussinet élastique de palier selon l'une quelconque des revendications 1 à 6, **caractérisé en ce que** le coussinet de support est formé à partir de deux éléments de coque de coussinet de support (3, 4) en métal ou en matière plastique, sur lesquels sont appliquées, de manière à adhérer, une couche intérieure élastomère (5) et une couche extérieure élastomère (6), et
**en ce que** la charnière de palier (9) est formée par un pont élastomère d'éléments de coque de coussinet de support (3, 4) au moins en partie non reliés localement par unité de matériau et/ou par un amincissement de matériau (8) d'éléments de coque de coussinet de support (3, 4) reliés localement au moins dans des zones partielles par unité de matériau.

8. Coussinet élastique de palier selon l'une quelconque des revendications 1 à 7, **caractérisé en ce que** le coussinet élastomère (1) présente une structure multicouche **en ce qu'**au moins une tôle intermédiaire relativement fine, déformable ou une coque en matière plastique sont intégrées par moulage dans au moins une couche élastomère (5, 6), lesquelles sont éventuellement guidées au-dessus de la zone de la charnière longitudinale et font partie intégrante de la charnière longitudinale (9).

9. Coussinet élastique de palier selon l'une quelconque des revendications 1 à 8, caractérisé en ce lors de la fabrication du coussinet élastomère (1), la fente longitudinale (7) présente un écartement défini, qui est fermé lorsque les demi-coques de serrage de palier (22, 23) sont assemblées par serrage.

10. Coussinet élastique de palier selon l'une quelconque des revendications 1 à 9, **caractérisé en ce qu'**un ergot de blocage (14) s'étendant longitudinalement, de préférence allongé est formé au niveau du côté extérieur du coussinet élastomère (1), de préférence dans la zone de la charnière longitudinale (9), et
**en ce qu'**un évidement (25) correspondant à l'ergot de blocage (14) est prévu dans au moins une, de préférence dans les deux demi-coques de serrage de palier (22, 23), au niveau de leur milieu longitudinal.
